# EUROPÄISCHE PATENTSCHRIFT

(11) **EP 0 676 682 B1**
(45) Veröffentlichungstag und Bekanntmachung des Hinweises auf die Patenterteilung: **14.07.1999**
(21) Anmeldenummer: 95105191.1
(22) Anmeldetag: 06.04.1995
(51) Int. Cl.: G05D 23/20, F24D 11/00

(54) **Solarkollektor mit Störungsüberwachung**
Solar collector with fault monitoring
Capteur solaire avec surveillance de panne

(30) Priorität: 07.04.1994 DE 4412024
(43) Veröffentlichungstag der Anmeldung: 11.10.1995
(73) Patentinhaber: Müller, Friedrich, 74589 Satteldorf (DE)
(72) Erfinder: Müller, Friedrich, 74589 Satteldorf (DE)
(74) Vertreter: von Hellfeld, Axel, Dr. Dipl.-Phys.

(56) Entgegenhaltungen:
- DE-A- 3 835 012
- US-A- 3 946 364
- US-A- 4 481 788
- US-A- 5 262 758
- US-A- 5 337 575
- ELECTRONIQUE ET APPLICATIONS INDUSTRIELLES, Nr. 281, März 1980 PARIS FR, Seiten 45-47, 'L'emploi des microprocesseurs dans les indicateurs numériques de température'

## Beschreibung

Die Erfindung betrifft eine Vorrichtung für die automatische Ermittlung und Anzeige von Störfällen in einer Solaranlage mit zumindest einem Solarkollektor; zumindest einem Warmwasserspeicher und/oder einer anderen Wärmeabnahmeeinrichtung; einem Wärmeträgerkreislauf, durch den ein Wärmeträger zwischen dem Solarkollektor und dem Warmwasserspeicher bzw. der anderen Wärmeabnahmeeinrichtung zirkuliert; Temperaturmeßeinrichtungen am Solarkollektor und am Warmwasserspeicher bzw. der anderen Wärmeabnahmeeinrichtung; und mit einer elektronischen Steuer- und Überwachungsschaltung für insbesondere den Betrieb einer Pumpe, die den Wärmeträger durch den Kreislauf fördert, wobei die elektronische Steuer- und Überwachungsschaltung Temperaturmeßsignale von den Temperaturmeßeinrichtungen erhält und insbesondere eine Differenz der Temperaturen am Solarkollektor und am Warmwasserspeicher bzw. der anderen Wärmeabnahmeeinrichtung ermittelt und mit einem vorgegebenen Schwellenwert vergleicht.

Solche Solaranlagen werden üblicherweise derart gesteuert, daß die Differenz der Temperaturen des Wärmeträgermediums am Ausgang des Solarkollektors und am Ausgang des Warmwasserspeichers bestimmt und für die Steuerung der Anlage herangezogen wird. Liegt die Temperatur des Wärmeträgermediums im Solarkollektor um mehr als einen vorgegebenen Schwellenwert über der Temperatur im Warmwasserspeicher, wird eine Pumpe in Gang gesetzt, um das Wärmeträgermedium in dem Kreislauf zu fördern, während dann, wenn die genannte Temperaturdifferenz unter einen Schwellenwert absinkt, der Kreislauf des Wärmeträgermediums stillgelegt wird.

Im Stand der Technik ist auch bekannt, die Steuer- und Überwachungsschaltungen von Solaranlagen mit Zusatzfunktionen auszurüsten, wie beispielsweise eine Abschaltung des Betriebs der Anlage (Förderung der Wärmeträgerflüssigkeit) bei bestimmten Temperaturen, oder auch die Steuerung einer Nachheizung im Warmwasserspeicher, üblicherweise mittels eines elektrischen Heizelementes. Auch sind im Stand der Technik Anzeigefelder bekannt, auf denen die Temperaturen im Kollektor und im Speicher dargestellt werden.

In dem Aufsatz von U. Schlienz in der Zeitschrift "Sonnenenergie" August 1991, Heft 4, S. 18 bis 21, Titel "Solare Warmwasserbereitung; Leistungsmessung mit Temperaturfüller", wird über längere Zeiträume (Tage) kontinuierlich der Verlauf von verschiedenen Temperaturen in der Solaranlage gemessen und abgespeichert. Diese Abspeicherung von Temperaturdaten über zumindest eines Tageszyklus der Solaranlage soll dazu dienen, die gewonnene Leistung zu ermitteln, und zwar ohne Durchflußmesser. Es geht um die Beobachtung der Anlage im störungsfreien Zustand und die Auswertung der einzelnen Leistungsdaten, um überhaupt die Funktion der Anlage als Ganzes zu verfolgen. Bei dieser bekannten Überwachungsvorrichtung ist ein sehr hoher Speicherbedarf erforderlich, da über sehr lange Zeitspannen die einzelnen Temperaturdaten etc. gespeichert werden müssen.

Aus der US-A-52 62 758 ist ein Kühlhaus bekannt, bei dem gemessen wird, wie lange die Temperatur einen vorgegebenen Schwellenwert überschritten hat und um so festzustellen, wie weit das Kühlgut beinträchtigt worden ist.

Aus der DE 3835012 A1 ist bekannt, in einer zwischen einem Solarkollektor und einem Warmwasserspeicher angeordneten Rohrleitung eine Meßeinrichtung zur bestimmung der Strömungsgeschwindigkeit und Ermittlung der Förderleistung der Pumpe vorzusehen.

Mit dieser Einrichtung kann auch der Durchfluß des Wärmeträgers durch den Kreislauf ermittelt werden.

Es ist im Stand der Technik auch bekannt, Solaranlagen daraufhin zu überwachen, ob bestimmte, wesentliche Bauteile funktionsfähig sind. Dies betrifft insbesondere den Ausfall eines Temperaturfühlers am Solarkollektor.

Während bei traditionellen Heizanlagen unter Verwendung von fossilen Brennstoffen Montage- oder auch Gerätefehler häufig nicht bemerkt werden, weil sie durch ein Mehr an Energieeinsatz kompensiert werden, haben Fehler bei Solaranlagen eine Minderleistung oder gar einen Ausfall der Solaranlage zur Folge.

Wie alle technischen Einrichtungen, so sind auch Solaranlagen nicht frei von Störfällen. Die vorliegende Erfindung befaßt sich mit dem Problem, bei Auftreten von Störfällen in Solaranlagen in möglichst einfacher und zuverlässiger Weise die Ursachen der Störung feststellen zu können und damit ihre Beseitigung zu vereinfachen.

Langjährige Erfahrungen im Bau und Betrieb von Solaranlagen haben gezeigt, daß bestimmte Störungen typisch sind und daß bestimmten Stör-Symptomen der Anlage ganz bestimmte Ursachen zugeordnet werden können.

In dem Buch "Aktive thermische Solartechnik in mitteleuropäischen Breiten", Autor: Friedrich Müller, zu beziehen über die Fa. Energie-Technik Müller des Anmelders, sind systematisierte Fehleranalysen beschrieben mit einer Darstellung der Vorgehensweise in Abhängigkeit vom Auftreten bestimmter Fehlersymptome.

Der Erfinder geht von folgender Erkenntnis aus:

Ein Hauptnachteil der Steuer- und Überwachungsschaltungen des Standes der Technik liegt darin, daß dort nur die momentanen Temperaturen am Kollektor bzw. im Warmwasserspeicher abgefragt werden können. Wenn also ein Monteur zu einer möglicherweise defekten Solaranlage gerufen wird, kann er nur Temperaturen der einzelnen Komponenten der Anlage ermitteln, wie sie momentan gegeben sind, nicht aber Temperaturen, wie sie im entscheidenden Augenblick des Auftretens der Störung geherrscht haben. Wenn z. B. die Störung nachmittags bei starker solarer Einstrahlung aufgetreten ist und der Betreiber der Solaranlage oder auch der Monteur erst am späten Nachmittag oder am Abend dazu kommt, die Anlage zu überprüfen, stehen bei diesem Stand der Technik nur die am späten Nachmittag bzw. Abend gegebenen Temperaturen bzw. Temperaturdifferenzen zur Verfügung, woraus für die Störungsanalyse in aller Regel wesentlich weniger Informationen zu gewinnen sind als aus denjenigen Temperaturen bzw. Temperaturdifferenzen, die dann geherrscht haben, als der Defekt erstmalig auftrat, was häufig Stunden vor der Untersuchungszeit liegt.

Die Erfindung lehrt deshalb, daß sowieso in einer herkömmlichen Solaranlage vorhandene Komponenten, wie Temperaturmeßeinrichtungen und mit Speichern versehene Mikroprozessoren in einfacher Weise dahingehend ausgenutzt werden, daß Temperaturwerte und/oder Temperaturdifferenzen abgespeichert und damit für eine spätere Auswertung festgehalten werden, die zu einem Zeitpunkt herrschten, an dem die Temperaturen bzw. Temperaturdifferenzen einen bestimmten Schwellenwert überschritten hatten, wobei diese Schwellenwertüberschreitung einen Störfall bedeutet.

Allein dies ermöglicht schon eine wesentliche Verbesserung und Vereinfachung der Fehleranalyse.

Die Solaranlage ist erfindungsgemäß durch die Merkmale des kennzeichnenden Teils von Anspruch 1 gekennzeichnet.

Erfindungsgemäß wird also ein Zeitfenster vorgesehen, beispielsweise ein Zeitfenster von 10 bis 15 Minuten, und es werden fortlaufend die genannten Temperaturen in der Solaranlage zu einer Vielzahl von Zeitpunkten innerhalb des Zeitfensters (z.B. alle 10 oder 20 Sekunden) gemessen und fortlaufend abgespeichert. Dabei wird das Zeitfenster fortlaufend entsprechend dem Gang einer Uhr verschoben. Für jede neugemessene Temperatur wird "am Ende" des Zeitfensters der "letzte" Meßwert gelöscht, sodaß nur immer eine vorgegebene, begrenzte Anzahl von Temperaturmeßwerten gespeichert werden muß, beispielsweise bei einem Zeitfenster von 20 Minuten und einer Messung alle 10 Sekunden müssen 120 Meßwerte jeweils gespeichert werden. Kommt es dann innerhalb eines Zeitfensters zu einem Störfall, was durch Überschreiten von Schwellenwerten (bzw. ein Unterschreiten von Schwellenwerten, je nach der Bedingung) erkannt wird, werden die vor und/oder nach dem Zeitpunkt des Auftretens der Störung abgespeicherten Temperaturmeßwerte "eingefroren", das heißt nicht flüchtig gespeichert und stehen dann zu einem wesentlich späteren Zeitpunkt (oder auch sogleich) für eine Störungsanalyse zur Verfügung. Gleichzeitig kann auch der Störfall optisch, akustisch oder auf andere Weise angezeigt werden.

Typischerweise ist als Wärmeabnahmeeinrichtung ein Warmwasserspeicher vorgesehen, es sind jedoch auch andere Wärmeabnahmeeinrichtungen alternativ oder zusätzlich denkbar wie beispielsweise ein Schwimmbad, ein Feststoffspeicher oder auch andere Wärmeabnahmestellen.

Wie oben erläutert ist, benötigt die Erfindung einen relativ geringen Speicherplatz zum Abspeichern der Temperaturdaten. Kommt es zu mehreren Störfällen, das heißt Über- bzw. Unterschreitungen von Schwellenwerten, dann werden für die einzelnen Störfälle jeweils die zugehörigen Temperaturen über die vorgegebenen Zeitspannen um den Störfall herum aufgezeichnet. Sollte dabei ein Speicher (beispielsweise eine Diskette) voll geschrieben werden, so ist gemäß einer bevorzugten Ausgestaltung der Erfindung vorgesehen, die Daten der vorletzten Störung mit den Daten der jüngsten Störung zu überschreiben. Gleichzeitig werden auch die Zeitpunkte notiert, an denen die Störfälle auftraten. Auf diese Weise bleibt der Beginn der Störung erhalten, was die Ursachenanalyse erleichtert. Daneben bleiben auch die Daten der allerletzten Störung erhalten, sodaß auch der aktuelle Zustand der Anlage erkennbar ist.

Das vorstehend erläuterte Zeitfenster enthält den Zeitpunkt, an dem der Störfall tatsächlich aufgetreten ist (also die Schwellenwertüberschaltung) und weitere Temperaturmeßdaten davor und/oder danach. Das Zeitfenster und die Anzahl der Temperaturmeßwerte innerhalb des Zeitfensters sind so bemessen, daß im Regelfall eine Störungsanalyse möglich ist.

Erfindungsgemäß werden also nur die jenigen Daten aufgezeichnet, die außerhalb der Bandbreite von zulässigen Abweichungen liegen.

Gemäß einer bevorzugten Ausgestaltung der Erfindung ist vorgesehen, daß mittels eines Durchflußmessers die Durchflußmenge im Wärmeträgerkreislauf gemessen wird und dann, wenn bei einer gegebenen Temperaturdifferenz zwischen Solarkollektor und Warmwasserspeicher bzw. einer anderen Wärmeabnahmeeinrichtung die Durchflußmenge unter einem vorgegebenen Schwellenwert liegt, die momentane Durchflußmenge und die Temperaturdifferenz gespeichert wird.

Gemäß einer weiteren bevorzugten Ausgestaltung der Erfindung ist zusätzlich vorgesehen, daß ein Durchflußmesser im Wärmeträgerkreislauf angeordnet ist und daß die Steuer- und Überwachungsschaltung dann, wenn zumindest ein Temperaturmeßsignal und/oder die Temperaturdifferenz einen Schwellenwert überschreitet, vom Durchflußmesser einen Durchflußmeßwert empfängt. Auch dieser Durchflußmeßwert zum Zeitpunkt der Schwellenwertüberschreitung wird gespeichert und steht dann später (evtl. Stunden oder auch Tage später) dem Monteur für die Fehleranalyse zur Verfügung.

Eine andere bevorzugte Ausgestaltung der Erfindung sieht folgendes vor: Es ist möglich, anhand der Größe des Kollektorfeldes und der eingestrahlten Sonnenenergie (in Watt) die zu erwartende Leistung des Kollektorfeldes annähernd vorherzusagen (falls kein Fehler vorliegt). Beispielsweise kann die eingestrahlte Sonnenenergie mittels eines geeigneten Meßinstrumentes gemessen und ein entsprechendes Signal an die Steuer- und Überwachungsschaltung übermittelt werden. Dann kann über vorgegebene Zeitspannen auch die tatsächlich vom Kollektorfeld gewonnene Leistung ermittelt werden, beispielsweise durch Messung der Temperaturerhöhung bzw. des Energieverbrauchs an der Wärmeannahmestelle, sodaß dann bei einem Auseinanderklaffen der aufgrund der gegebenen Solareinstrahlung zu erwartenden Leistung des Kollektorfeldes und der tatsächlich erzeugten Leistung auf einen Fehler in der Anlage erkannt wird. Die Störung kann unmittelbar angezeigt werden und es können auch die vor und/oder nach dem Zeitpunkt des Auftretens der Störung gemessenen Temperaturdaten und gegebenenfalls auch die Durchflußdaten des Wärmeträgerkreilaufes abgespeichert und für eine spätere Störungsanalyse bereitgestellt werden.

Wird bei der Verwendung der zu erwartenden und der tatsächlichen Leistungsdaten des Kollektorfeldes für die Ermittlung eines Störfalles auch zusätzlich noch die Umgebungstemperatur und die Speichertemperatur ermittelt, so läßt sich die Leistung des Kollektorfeldes noch genauer ermitteln und vergleichen.

Weiterhin läßt sich die Fehleranalyse auch dadurch noch verbessern, daß der Zeitpunkt, zu dem zumindest ein Temperaturmeßsignal einen Schwellenwert überschritten hat, abgespeichert und festgehalten wird. Auch diese erfindungsgemäße Maßnahme erfordert in aller Regel keinen zusätzlichen baulichen Aufwand für die Solaranlage, da die Steuer- und Überwachungsschaltung sowieso einen Zeitgeber enthält, so daß dieses Merkmal durch eine entsprechende Programmierung des Mikroprozessors verwirktlicht werden kann.

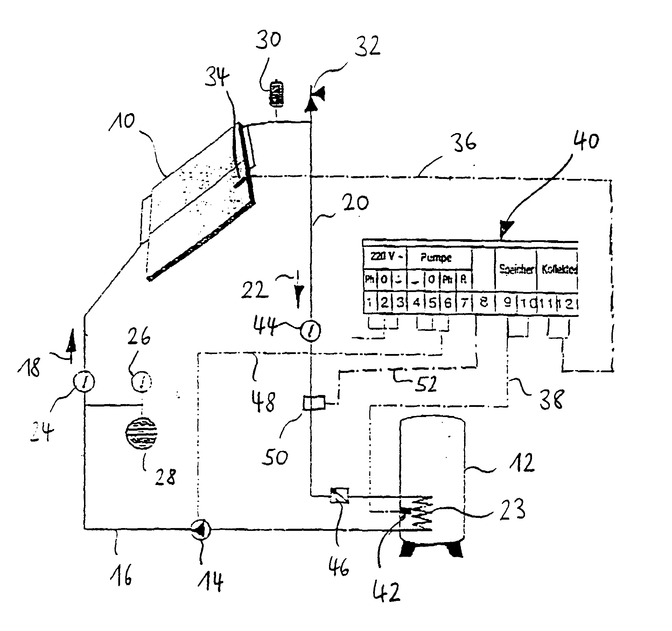

Nachfolgend wird die Erfindung anhand der Zeichnung näher beschrieben.

Die Figur zeigt schematisch eine Solaranlage mit einem Solarkollektor 10 und einem Warmwasserspeicher 12.

Eine Pumpe 14 fördert in herkömmlicher Weise ein Wärmeträgermedium durch eine Leitung 16 in Richtung des Pfeiles 18 zum Solarkollektor 10. Das im Solarkollektor erwärmte Wärmeträgermedium strömt über eine Leitung 20 in Richtung des Pfeiles 22 zum Warmwasserspeicher 12 zurück, wo über einen Wärmetauscher 23 die durch Solarenergie gewonnene Wärme an das Wasser im Warmwasserspeicher 12 abgegeben wird.

Im Wärmeträgerkreislauf, der durch die Leitungen 16, 20 unter Einschluß des Solarkollektors 10 und des Wärmetauschers 23 im Warmwasserspeicher 12 gebildet wird, sind weiterhin Thermometer 24, 44 angeordnet, wobei ein Thermometer 24 im sogenannten Vorlauf (Leitung 16) und ein anderes Thermometer 44 im sogenannten Rücklauf (Leitung 20) angeordnet ist.

Weiterhin sind am Vorlauf ein Manometer 26 und ein Ausdehnungsgefäß 28 angeordnet.

Am oberen Ende der Solaranlage sind ein Entlüftungstopf 30 und ein Sicherheitsventil 32 vorgesehen.

Am Auslauf des Wärmeträgermediums aus dem Solarkollektor 10 (vor dem Rücklauf 20) ist ein Temperaturfühler 34 angeordnet, der die Temperatur des Wärmeträgermediums im Kollektor mißt. Das entsprechende elektrische Temperatursignal wird über eine Leitung 36 zu der Steuer- und Überwachungsschaltung 40 übermittelt. Im Warmwasserspeicher 12 ist etwa mittig zwischen dem Zulauf (Leitung 20) zum Wärmetauscher 23 und dem Ablauf (Leitung 16) des Wärmetauschers 23 ein weiterer Temperaturfühler 42 angeordnet, dessen Temperaturmeßsignal über eine Leitung 38 zur Steuer- und Überwachungsschaltung 40 übertragen wird.

Weiterhin enthält der Rücklauf in bekannter Weise ein Rückschlagventil 46.

Die Pumpe 14 ist über eine elektrische Leitung 48 mit der Steuer- und Überwachungsschaltung 40 verbunden und erhält von dort ihre Steuersignale ("ein" oder "aus" und ggf. Pumpleistung).

Weiterhin ist im Rücklauf (Leitung 20) der Solaranlage ein Durchflußmesser 50 angeordnet, der die pro Zeiteinheit durch die Leitung strömende Wärmeträgermenge mißt und ein entsprechendes Meßsignal über eine Leitung 52 zur Steuer- und Überwachungsschaltung 40 übermittelt.

Wesentlich für die Ermittlung von möglichen Störungen der Solaranlage ist eine Messung der Temperaturen des Wärmeträgermediums im Solarkollektor 10 mittels des Temperaturfühlers 34 einerseits und eine Messung der Temperatur des Wärmeträgermediums am oder im Wärmetauscher 23 andererseits, für letzteres dient der Temperaturfühler 42.

Die Steuer- und Überwachungsschaltung 40 wertet sowohl die Absolutwerte der Temperaturen als auch insbesondere deren Differenz aus.

Für die Ermittlung von Störungen und die Störungsanalyse (Ursachensuche) lassen sich im wesentlichen folgende Einteilungen bezüglich der mit den Temperaturfühlern 34, 42 gemessenen Temperaturen vornehmen:
a) Die Temperaturdifferenz ist zu hoch,
b) die Temperaturdifferenz ist zu niedrig,
c) die Temperaturdifferenz ist negativ (die Temperatur im Warmwasserspeicher ist wärmer als im Kollektor und die Solaranlage läuft trotzdem).

Weiterhin kommt noch der Sonderfall in Betracht, daß die Wärmeträgerflüssigkeit zu sieden beginnt, was mit dem Temperaturfühler 34 allein festgestellt werden kann.

Wenn vorstehen von "zu hohen" oder "zu niedrigen" Temperaturdifferenzen die Rede ist, dann ist ein Vergleich der Temperaturdifferenz mit einem vorgegebenen Schwellenwert gemeint, der sich aus üblichen Erfahrungswerten ergibt.

Bei dieser Unterteilung der hauptsächlich vorkommenden Störungssymptome lassen sich folgende Störungsursachen im Rechner abspeichern und vom Monteur abrufen:
1) Die Temperaturdifferenz ist zu hoch:
   Umwälzpumpe ist zu klein,
   Leitung teilweise verstopft,
   Ventile oder sonstige Armaturen teilweise verstopft,
   Schutzfilter teilweise verstopft,
   Wärmetauscher innen zugesetzt (verkalkt),
   Temperaturfühler falsch angebracht,
   Wärmetauscher zu klein,
   Kreislauf teilweise abgeschnitten.
2) Die Temperaturdifferenz ist zu niedrig:
   Wärmetauscher außen verkalkt,
   Fühler falsch angebracht,
   Kollektorfeld zu klein,
   Kollektorfeld beschattet,
   mangelhafte Isolation,
   Umwälzpumpe zu groß
   Kollektoren nicht vollständig durchströmt.
3) Die Temperaturdifferenz ist negativ (Speicher wärmer als Kollektor bei laufender Solaranlage):
   Fühler falsch angebracht,
   Fühler defekt,
   Anlage schaltet zu spät ab,
   Pumpe arbeitet in falscher Richtung,
   Rückschlagventil fehlt (Schwerkraft),
   Fehlzirkulation aus einem anderen Kreis.

Weiterhin ist für den Fall, daß das Wärmeträgermedium siedet folgende Fehleranalyse typisch: Umwälzpumpe defekt, Stromausfall, Temperaturfühler defekt, Leitungen verstopft, Ventile verstopft, Schmutzsieb verstopft.

Für jede der vorstehend genannten Bedingungen a) bis c) und auch für den Fall eines Siedens der Wärmeträgerflüssigkeit läßt sich also häufig schon die zugrundeliegende Fehlerursache eingrenzen. Dabei ist für die Fehlereingrenzung wesentlich, daß die Temperaturdifferenzen für den Zeitpunkt der Fehleranalyse zugrundegelegt werden, zu dem erstmalig der Störfall aufgetreten ist, also die Temperaturdifferenz einen vorgegebenen Schwellenwert überschritten hat, wobei das Überschreiten des Schwellenwertes den Fehler anzeigt.

Auf einer Anzeigeeinrichtung der Steuer- und Überwachungsschaltung 40 kann bei einer einfachsten Ausgestaltung der Erfindung dann als Fehlersymptom sinngemäß folgendes angezeigt werden: "Fehler: Temperaturdifferenz zu hoch"; zulässig 10° C, eingetreten 15° C.

Bei dieser einfachsten Ausgestaltung kann der Monteur bereits aufgrund dieser Angaben Rückschlüsse auf den möglichen Fehler ziehen, wobei die Analyse dadurch erleichtert ist, daß die Temperaturdifferenz während des Auftretens des Störfalles zur Verfügung steht. Beispielsweise ist eine typische Ursache des vorstehend genannten Fehlers, das die Umwälzmenge der Wärmeträgerflüssigkeit zu gering ist oder daß der Wärmetauscher 23 verkalkt ist.

Bei einem weiter verbesserten Überwachungssystem könnte dann noch der Zeitpunkt angezeigt werden, zudem die über einem zulässigen Schwellenwert liegende Temperaturdifferenz aufgetreten ist, also z. B. 14.00 Uhr oder dergleichen. Auch hieraus kann der Monteur Rückschlüsse auf die Fehlerursache ziehen, da der Zeitpunkt des Auftretens des Fehlers eine Aussage enthält über die gerade herrschende Intensität der solaren Einstrahlung.

Bei einem noch weiter verbesserten System kann die Fehleranalyse im Rechner der Steuer- und Überwachungsschaltung 40 wie ein sogenanntes "Expertensystem" durchgeführt werden, wobei für die gegebene Solaranlage typische Erfahrungswerte bezüglich des Zusammenhanges von bestimmten Symptomen zu bestimmten Ursachen im Speicher des Prozessors abgelegt und für die Fehleranalyse herangezogen werden.

Durch Messung weiterer Betriebsparameter der Solaranlage läßt sich der Fehler weiter eingrenzen, so insbesondere durch einen Durchflußmesser 50 gemäß der Figur. Steht ein solcher Durchflußmesser zur Verfügung, so würde im Falle einer über einem vorgegebenen Schwellenwert liegenden Temperaturdifferenz zwischen Kollektor und Speicher die Steuer- und Überwachungsschaltung 40 über die Leitung 52 den momentanen Meßwert der Durchflußmenge des Wärmeträgers abfragen und speichern. In diesem Falle würde auf der Anzeige der Steuer- und Überwachungsschaltung 40 (später) folgendes erscheinen:
Temperaturdifferenz zu hoch
zulässig 10° C, eingetreten 15° C

Zustand erreicht um 15.00 Uhr
Durchflußmessung 0,2 l/sec

Kollektortemperatur 55° C
Speichertemperatur 40° C
solare Einstrahlung 800 W

Der Monteur (oder auch der entsprechend programmierte Prozessor der Steuer- und Überwachungsschaltung 40) kann aus diesen Daten erkennen, daß alle Werte typisch, d. h. ohne Fehleranzeige sind, nicht jedoch die Durchflußmenge, die geringer ist als bei störungsfreiem Normalbetrieb. Hieraus kann dann der Monteur (oder der Rechner) auf eine nicht vollständige Verstopfung des Wärmeträgerkreislaufes schließen. Wäre hingegen die Durchflußmenge gleich Null, so könnte die Ursache liegen in einem Defekt der Pumpe 14, einem Stromausfall, einem zu geringen Druck in der Solaranlage oder einer vollständig verstopften Leitung im Wärmeträgerkreislauf 10, 20.

Abhängig von dem Ergebnis der ersten Grobanalyse könnte dann die Fehleranalyse weiter fortschreiten und durch Messungen einige der Fehlerursachen ausschließen, z. B. Überprüfung der Umwälzpumpe, Messung des Druckes in der Solaranlage (Stillstand etc.).

Wichtig ist dabei, daß alle zum Zeitpunkt des erstmaligen Auftretens des Störfalles herrschenden Betriebsbedingungen, insbesondere also die Temperaturen, Temperaturdifferenzen und gegebenenfalls Durchflußmengen etc. mittels Abspeicherung "konserviert" werden, um später eine Fehleranalyse in Kenntnis dieser Daten durchführen zu können. Zusätzlich zu den vorstehend genannten Daten ist bei bevorzugten Weiterbildungen der Überwachungsanlage auch noch vorgesehen, weitere Daten abzuspeichern, wie z. B. einen Stromausfall, die Durchflußmenge, die zum Zeitpunkt der Störung herrschende Solareinstrahlung etc.

Die vorstehend erläuterte Fehleranalyse und das beschriebene Verfahren hierzu haben insbesondere den Vorteil, daß bei Solaranlagen eine Energievergeudung durch Nachheizung mittels fossiler Brennstoffe oder Elektroenergie vermieden ist.

## Patentansprüche

1. Solaranlage mit einer Vorrichtung für die Ermittlung und/oder Anzeige von Störfällen in der Solaranlage mit zumindest einem Solarkollektor (10); zumindest einem Warmwasserspeicher (12) und/oder einer anderen Wärmeabnahmeeinrichtung; einem Wärmeträgerkreislauf (16, 20), durch den ein Wärmeträger zwischen dem Solarkollektor (10) und dem Warmwasserspeicher (12) bzw. der anderen Wärmeabnahmeeinrichtung zirkuliert; Temperaturmeßeinrichtungen (34, 42) am Solarkollektor (10) und am Warmwasserspeicher (12) bzw. der anderen Wärmeabnahmeeinrichtung; und mit einer elektronischen Steuer- und Überwachungsschaltung (40) für insbesondere den Betrieb zumindest einer Pumpe (14), die den Wärmeträger durch den Kreislauf (16, 20) fördert, wobei die elektronische Steuer- und Überwachungsschaltung (40) Temperaturmeßsignale von den Temperaturmeßeinrichtungen (34, 42) erhält und insbesondere eine Differenz der Temperaturen am Solarkollektor (10) und am Warmwasserspeicher (12) bzw. der anderen Wärmeabnahmeeinrichtung ermittelt und mit einem vorgegebenen Schwellenwert vergleicht,
**gekennzeichnet** durch eine Speichereinrichtung, die die Temperaturen und/oder die Differenz der Temperaturen zum Zeitpunkt des Überschreitens oder Unterschreitens eines Schwellenwertes und in einer vorgegebenen Zeitspanne vor und/oder nach diesem Zeitpunkt abspeichert und festhält.

2. Solaranlage nach Anspruch 1,
dadurch **gekennzeichnet**, daß ein Durchflußmesser (50) im Wärmeträgerkreislauf (16, 20) angeordnet ist und daß die Steuer- und Überwachungsschaltung (40) dann, wenn zumindest eine Temperatur und/oder die Temperaturdifferenz einen Schwellenwert überschreitet bzw. unterschreitet, vom Durchflußmesser (50) einen Durchflußmeßwert empfängt.

3. Solaranlage nach einem der Ansprüche 1 oder 2,
dadurch **gekennzeichnet**, daß der Zeitpunkt, zu dem zumindest ein Temperaturmeßsignal einen Schwellenwert überschritten hat, abgespeichert und festgehalten wird.

4. Solaranlage nach einem der vorhergehenden Ansprüche,
dadurch **gekennzeichnet**, daß die Zeitspanne 2 bis 30 Minuten lang ist, vorzugsweise 2 bis 15 Minuten.

5. Solaranlage nach einem der vorhergehenden Ansprüche,
dadurch **gekennzeichnet**, daß mittels eines Durchflußmessers die Durchflußmenge im Wärmeträgerkreislauf gemessen wird und dann, wenn bei einer gegebenen Temperaturdifferenz zwischen Solarkollektor und Warmwasserspeicher bzw. einer anderen Wärmeabnahmeeinrichtung die Durchflußmenge unter einem vorgegebenen Schwellenwert liegt, die momentane Durchflußmenge und die Temperaturdifferenz gespeichert werden.

## Claims

1. Solar installation provided with a device for detecting and/or displaying failures occurred in the solar installation, said installation comprising at least one solar collector (10); at least one warm-water tank (12) and/or another heat taking device; a circulatory system (16, 20) for a heat transfer medium in which the heat transfer medium circulates between the solar collector (10) and the warm-water tank (12) or the other heat taking device, respectively; temperature measuring devices (34, 42) at the solar collector (10) and the warm-water tank (12) or the other heat taking device, respectively; and an electronic control and monitoring circuitry (40) especially for the operation of at least one pump (14) for delivering the heat transfer medium through the circulatory system (16, 20), said electronic control and monitoring circuitry (40) receiving temperature measuring signals from the temperature measuring devices (34, 42) and, more particularly, detecting a difference between the temperatures prevailing at the solar collector (10) and the warm-water tank (12) or the other heat taking device, respectively and comparing said difference to a given threshold value,
said solar installation being **characterized by** a memory means which acts to store and to hold the temperatures and/or the difference between the temperatures measured at the point of time a threshold value is exceeded or when the temperature falls below a threshold value and within a given period of time prior to and/or after that point of time.

2. Solar installation according to claim 1,
**characterized** in that a flowmeter (50) is installed in the heat transfer medium circulatory system (16, 20), and in that the control and monitoring circuitry (40) receives a measuring value of the flow throughput from the flowmeter (59) if at least a temperature and/or the temperature difference exceeds or remains below, respectively, a threshold value.

3. Solar installation according to anyone of claims 1 or 2,
**characterized** in that the point of time at which at least one temperature measuring signal has exceeded a threshold value, will be stored and hold.

4. Solar installation according to anyone of the preceding claims,
**characterized** in that the period of time has a length of from 2 to 30 minutes, preferably of from 2 to 15 minutes.

5. Solar installation according to anyone of the preceding claims,
**characterized** in that rate of flow in the heat transfer medium circulatory system will be measured by a flowmeter, and that, at a given temperature difference between the solar collector and the warm-water tank or another heat taking device, respectively, if the rate of flow is below a given threshold value, the instantaneous rate of flow and the temperature difference will be stored.

## Revendications

1. Installation solaire équipée d'un dispositif de détection et/ou d'affichage de pannes intervenues dans l'installation solaire, cette dernière comprenant au moins un collecteur solaire (10); au moins un réservoir d'eau chaude (12) et/ou un autre dispositif de prise de chaleur; un système de recyclage d'un agent caloporteur (16, 20) dans lequel l'agent caloporteur circule entre le collecteur solaire (10) et le réservoir d'eau chaude (12) ou l'autre dispositif de prise de chaleur, respectivement; des moyens de thermométrie (34, 42) disposés au collecteur solaire (10) et au réservoir d'eau chaude ou à l'autre dispositif de prise de chaleur, respectivement; et un circuit électronique de commande et de surveillance (40), spécialement pour le fonctionnement d'une pompe (14), au moins, qui est prévue pour faire circuler l'agent caloporteur dans le système de recyclage (16, 20), ledit circuit électronique de commande et de surveillance (40) recevant des signaux de mesures de température des moyens de thermométrie (34, 42) et détectant, plus particulièrement, une différence entre les températures existantes au collecteur solaire (10) et au réservoir d'eau chaude (12) ou à l'autre dispositif de prise de chaleur, respectivement, et faisant une comparaison entre cette différence et une valeur de seuil donnée, ladite installation étant **caractérisée** par une mémoire qui enregistre et retient les températures et/ou la différence entre les températures détectées au moment où une valeur de seuil est dépassée ou n'est pas atteinte et pendant une période de temps donnée précédant et/ou suivant cet instant.

2. Installation solaire selon la revendication 1,
**caractérisée** en ce qu'un débitmètre (50) est installé dans le système de recyclage de l'agent caloporteur (16, 20), et en ce que le circuit de commande et de surveillance (40) reçoit du débitmètre (50) une valeur mesurée du débit si une température, au moins et/ou la différence de température dépasse(nt) une valeur de seuil ou reste(nt) inférieure(s) à celle-ci.

3. Installation solaire selon l'une quelconque des revendications 1 ou 2,
**caractérisée** en ce que le moment où un signal de mesure de température, au moins, a dépassé une valeur de seuil, sera enregistré dans la mémoire et retenu.

4. Installation solaire selon l'une quelconque des revendications précédentes,
**caractérisée** en ce que la période de temps a une longueur de 2 à 30 minutes, de préférence de 2 à 15 minutes.

5. Installation solaire selon l'une quelconque des revendications précédentes,
**caractérisée** en ce que le débit de passage dans le système de recyclage de l'agent caloporteur est mesuré au moyen d'un débitmètre, et en ce que, pour une différence de température donnée entre le collecteur solaire et le réservoir d'eau chaude ou un autre dispositif de prise de chaleur, respectivement, quand le débit de passage est inférieur à une valeur de seuil donnée, le débit de passage instantané et la différence de température seront emmagasinés.
